(19) Europäisches Patentamt
European Patent Office
Office européen des brevets

(11) EP 2 160 008 A1

(12) EUROPEAN PATENT APPLICATION

(43) Date of publication:
03.03.2010 Bulletin 2010/09

(51) Int Cl.:
H04N 1/60 (2006.01)

(21) Application number: 09168520.6

(22) Date of filing: 24.08.2009

(84) Designated Contracting States:
AT BE BG CH CY CZ DE DK EE ES FI FR GB GR
HR HU IE IS IT LI LT LU LV MC MK MT NL NO PL
PT RO SE SI SK SM TR
Designated Extension States:
AL BA RS

(30) Priority: 27.08.2008 JP 2008218822

(71) Applicant: CANON KABUSHIKI KAISHA
Ohta-ku
Tokyo 146-8501 (JP)

(72) Inventors:
• Hatori, Kazushige
Ohta-ku Tokyo (JP)
• Muto, Hiroyuki
Ohta-ku Tokyo (JP)

(74) Representative: Foxon, Rachel Siobhan
Canon Europe Ltd
European Patent Department
3 The Square
Stockley Park
Uxbridge, Middlesex UB11 1ET (GB)

(54) **Chart for color calibration, and image processing method and image processing apparatus using the chart**

(57) In a chart for color calibration which is output and colorimetrically measured for color calibration of a printer device, respective charts of a color chart are arranged obliquely with respect to the alignment direction of grid points in a printer device color space or in a state that a plane in which charts are arranged on grid points and a plane in which charts are not arranged on grid points are alternately combined, on a color space of the color chart. With this configuration, a novel chart for color calibration which assures higher accuracy despite having a smaller number of steps (number of charts), and an image processing method and image processing apparatus using the chart are provided.

# F I G. 4B

**Description**

BACKGROUND OF THE INVENTION

Field of the Invention

The present invention relates to a chart for color calibration, and an image processing method and image processing apparatus using the chart and, more particularly, to a chart for calibration used to execute printer calibration in a color printer.

Description of the Related Art

Conventionally, a color printer such as an electrophotographic printer using color materials of cyan, magenta, yellow, and black (CMYK colors) is calibrated using color charts. Color charts used to calibrate a CMYK color gamut include a plurality of elements representing certain colors sampled from the CMYK color gamut. The colors to be represented as elements are selected or sampled from the CMYK color gamut in sampling steps along each of the CMY axes by appropriately changing the device values (output values) of CMY or CMYK colors. When six sampling steps (stages or tones) for each of the CMY colors are used then $6 \times 6 \times 6 = 216$ sampling points in the CMY color gamut are selected and the colors of the sampling points output as 216 elements on a color chart. When five sampling steps for each of the CMY colors are used then 125 sampling points in the CMY color gamut are selected and output as 125 elements on a color chart. When 4 sampling steps for each of the CMY colors are used then 64 sampling points in the CMY color gamut are selected and output as 64 elements on a color chart. That is, when device values of n steps are selected in a CMY color gamut, $n^3$ sampling points are selected in the CMY color gamut and output as $n^3$ elements or patches on the color chart. When device values of n steps are selected in a CMYK color gamut, $n^4$ sampling points are selected in the CMYK color gamut and output as $n^4$ elements on the color chart.

As a method of assuring higher accuracy using a smaller number of sampling steps (corresponding to a smaller number of sampling points and elements output on a color chart), Japanese Patent Laid-Open No. 07-264411 has proposed a technique that enhances estimation accuracy based on a measurement result obtained by setting variant steps including a larger number of steps for a non-linear tone characteristic region.

However, when a small number of sampling steps are selected (in other words when a low n is selected), since the interval between neighboring sampling steps broadens and consequently the interval between sampling points in the color gamut broadens, printer fluctuations derived from primary color fluctuations that occur between sampling steps cannot always be corrected for because these fluctuations may not be discernable from the limited number of elements output on the color chart. This problem will be described in detail later in contrast to the present invention in the description of embodiments.

SUMMARY OF THE INVENTION

The present invention has been made in consideration of the problem mentioned above, and provides a method of calibrating a printer device, a method of printing in a printer device, color chart data, a color chart, a printer device and a color calibration system, that can assure high accuracy even when a low number of sampling steps is selected (and consequently a low number of sampling points in color space are selected and output as elements in the color chart) .

In order to solve the above problems, a chart for color calibration according to the present invention is provided as follows.

The present invention in its first aspect provides a method of generating a color chart as specified in claims 1 to 7.

The present invention in its second aspect provides a method of calibrating a printer device as specified in claim 8.

The present invention in its third aspect provides a method of printing as specified in claims 9 and 10.

The present invention in its fourth aspect provides color chart data as specified in claim 11. The color chart data has the potential, when used by a printer device to print a color chart, to bring about the technical effects of the present invention.

The present invention in its fifth aspect provides a printer device as specified in claim 12. The present invention in its sixth aspect provides a color calibration system as specified in claim 13. The present invention in its seventh aspect provides a color chart as specified in claim 14. The present invention in its eighth aspect provides a computer program as specified in claim 15. The program of claim 15 may be carried by a carrier medium. The color chart data of claim 11 may also be carried by the same or a different carrier medium. The or each carrier medium may be a storage medium. Alternatively, the or each carrier medium may be a transmission medium. For example, color chart data may be supplied in a signal transmitted to the printer device over a network such as the Internet, or over a wire or wireless connection from a computer or print server which supplies signals to the printer device to cause it to print.

According to the present invention, a chart for color calibration which can provide a high correction effect even when a smaller number of points in the color space are selected and output as elements in the color chart, and an image processing method and image processing apparatus using the chart can be provided.

Further features of the present invention will become apparent from the following description of exemplary embodiments (with reference to the attached drawings).

BRIEF DESCRIPTION OF THE DRAWINGS

Fig. 1 is a block diagram showing an example of the configuration that implements color calibration of an image processing apparatus according to an embodiment of the present invention;

Fig. 2 is a block diagram for explaining the functions of a color correction unit in the color calibration according to the embodiment;

Fig. 2A shows an example of a color chart according to an embodiment of the present invention;

Fig. 3 is a block diagram showing an example of the operation of an output processing unit including a fluctuation model and output processing unit (ideal state);

Fig. 4A is a view (CM-plane) showing an arrangement of sampling points in the CMY color space to be output in a color chart in the first configuration example of the embodiment;

Fig. 4B is a three-dimensional view showing the arrangement of sampling points in the CMY color space to be output in a color chart in the first configuration example of the embodiment;

Fig. 5A is a view (CY-plane) showing a conventional arrangement of sampling points in the CMY color space to be output in a conventional color chart in contrast to the first configuration example of the embodiment;

Fig. 5B is a view (CY-plane) showing an arrangement of sampling points in the CMY color space to be output in a color chart in the first configuration example of the embodiment;

Fig. 6 is a graph showing the relationship between an ideal state of output values and density values of cyan for a particular device, and an actual state in which cyan output fluctuates from the ideal state when output in the range from 50 to 75%, and the arrangement of elements for calibration in the first configuration example of the embodiment;

Fig. 7 is a view showing the relationship between the arrangement of sampling points in Fig. 4A in the first configuration example of the embodiment, and a grid with horizontal and vertical grid lines parallel to the cyan and magenta color axes respectively;

Fig. 8 is a table showing the relationship between the number of steps for the CMY device colors and the number of sampling points in the device color space and consequently the number of elements to be output on color charts;

Fig. 9A is a view showing an arrangement of sampling points in CMY color space for the 0th, 2nd, and 4th steps in the Y-direction in the second configuration example of the embodiment;

Fig. 9B is a view showing an arrangement of sampling points in CMY color space for the 1st, 3rd, and 5th steps in the Y-direction in the second configuration example of the embodiment;

Fig. 10 is a table showing the relationship between combination examples of alternate arrangements in the CM-plane and alternate arrangements or uniform arrangements in the Y-direction, and the total numbers of color charts required on the CMY space in those cases;

Fig. 11 is a graph showing the relationship between the output value and density value of a color printer device;

Fig. 12 shows graphs of an example in which the number of sampling steps is decreased for a linear region, and the number of sampling steps is increased for a non-linear region in the related art;

Fig. 13A is a view (three-dimensional view) showing a conventional arrangement of 125 sampling points in the CMY device color space of a printer;

Fig. 13B is a view (CM-plane view) showing the conventional arrangement of 125 sampling points in the CMY device color space of a printer when viewed from the Y-direction;

Fig. 14 is a graph showing the relationship between an ideal state and an actual state of output values and density values of a color printer device, and the arrangement of five steps for calibration;

Fig. 15 is a graph showing the relationship between an ideal state of output values and density values of cyan for a particular device, and an actual state in which cyan output fluctuates from the ideal state when output in the range from 50 to 75%, and the arrangement of five sampling steps for calibration; and

Fig. 16 is a view for illustrating a region in the CMY device color space in which color fluctuations derived from primary color fluctuations may occur.

DESCRIPTION OF THE EMBODIMENTS

Embodiments of the present invention will be described in detail hereinafter with reference to the accompanying drawings.

<Configuration Example That Implements Color Calibration of Image Processing Apparatus of This Embodiment>

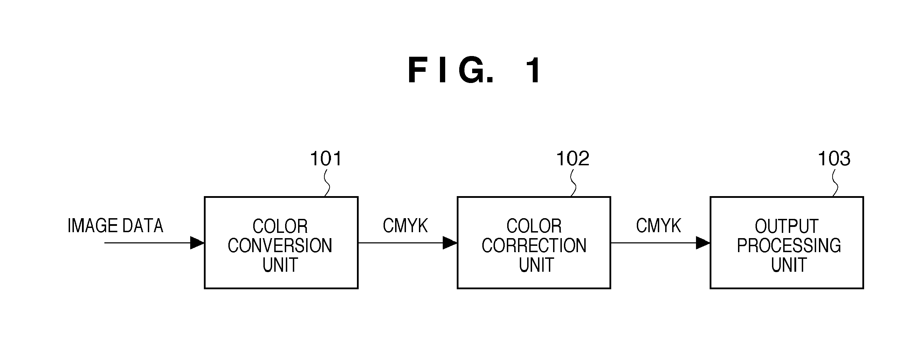

Fig. 1 is a block diagram schematically showing a conversion process that is performed on image data in an image processing apparatus.

An image processing apparatus exemplified in this embodiment converts image data sent from a computer or the like to CMYK values as color data of output colors of a printer using a color conversion unit 101. Next, a color correction unit 102 converts the CMYK values sent from the color conversion unit 101 into corrected values, so that the printer can obtain reproduction colors equivalent to a model printer. The model printer represents a printer which functions based on designed values or always in an ideal state free from any fluctuations. An output processing unit 103 performs halftoning processing of an image using the CMYK values sent from the color correction unit 102, and also performs output processing onto a paper sheet, thus obtaining printed matter. The image processing apparatus of this embodiment will also be referred to as a printer device hereinafter.

Note that the color conversion unit 101 and color correction unit 102 of this embodiment may be mounted in a body with the output processing unit 103, and may be implemented by a controller (not shown) of the printer. A control unit (not shown) used to control the printer may be added, and may implement the aforementioned units. In the following description, these units are implemented by the controller of the printer.

<Overview of Functions of Color Correction Unit 102>

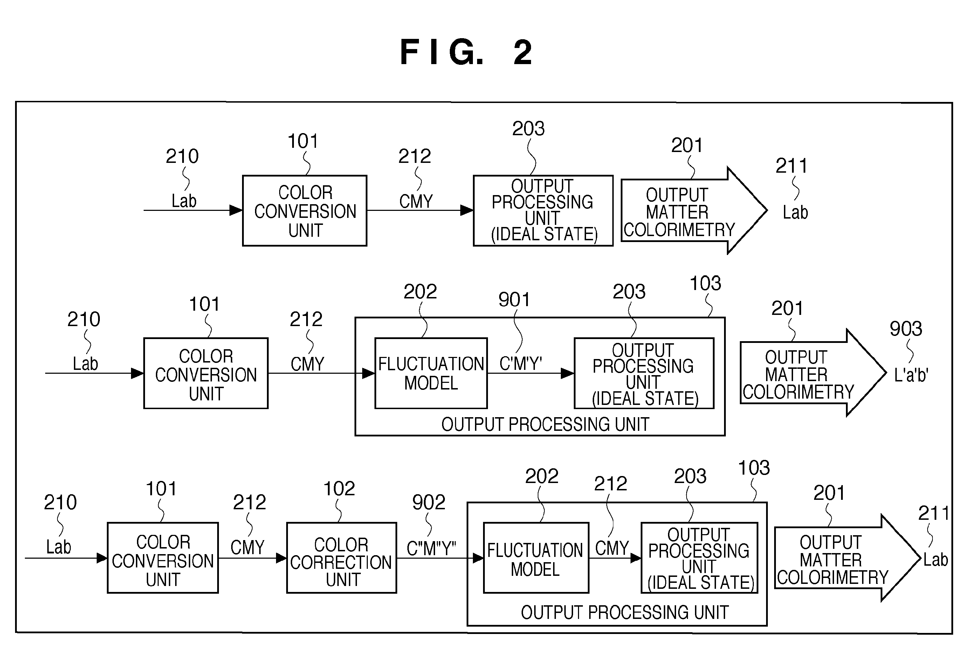

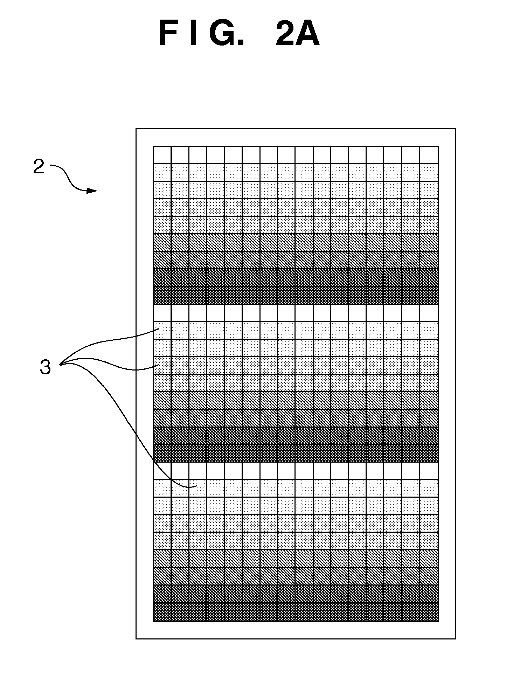

Fig. 2 is a block diagram of an abstract model for explaining the purpose of the color correction unit 102 shown in Fig. 1. In this embodiment, the following settings are made for the sake of simplicity. That is, assume that image data is CIELab data as colors in a device independent color space. Also, assume that device color values sent to the color correction unit 102, and those sent from the color correction unit 102 to the output processing unit 103 are CMY values without any K value i.e. black ink data is excluded from consideration. However as will be understood by the skilled person, image data may be other image data such as RGB data, and the color correction unit 102 may perform correction including a K value.

(Ideal Printer Model)

The upper stage of Fig. 2 is a block diagram which represents an idealized printing system. Note that the printer model is expressed as an output profile table that defines output reproduction colors of the printer.

In this case, all Lab values 210 of a color gamut of the printer, which are sent to the color conversion unit 101 as image data, are converted into corresponding CMY values 212 as color values of the printer. An ideal output processing unit 203, which receives the color values CMY of the printer, executes output processing of an image corresponding to the image data onto a paper sheet. Colors Lab 211, which are obtained by executing output matter colorimetry 201 of the output image using a colorimeter, and are expressed by device independent color space values, match the Lab values 210 input to the color conversion unit 101 as the image data.

(Fluctuation Model)

The middle stage of Fig. 2 is a block diagram showing a state in which the printer causes color reproduction fluctuations i.e. the printer does not function as an ideal printer. In this middle stage the printer (output processing unit 103) is represented by the ideal printer 203 and a fluctuation model 202.

When the output state of the printer fluctuates due to an environmental factor or temporal change and the color reproduction of colors changes, the output values Lab 211 from the output processing unit 203 change to values L'a'b' 903. As shown in the middle stage of Fig. 2, fluctuations derived from an environmental factor or temporal change can be represented by a "fluctuation model 202" which occurs in the output processing unit 103 corresponding to Fig. 1, that is, in a stage preceding the output processing unit (which is still presumed to be in an ideal state) 203. This fluctuation model 202 changes the actually sent CMY values 212 to C'M'Y' values 901. The abstract concept of such a fluctuation model 202 can help in modeling and correcting for printer output fluctuations and color reproduction fluctuations.

(Function of Color Correction Unit 102)

Hence, as shown in the lower stage of Fig. 2, the color correction unit 102 is arranged in a subsequent stage of the color conversion unit 101.

The color correction unit 102 performs color correction, so that the device color values sent from the fluctuation model 202 to the output processing unit (ideal state) 203 return from the C'M'Y' values 901 shown in the middle stage as a result of conversion of the fluctuation model 202 to the CMY values 212. More specifically, the color correction unit 102 performs conversion from the CMY values 212 to C"M"Y" values 902 and may be thought of as sending the C"M"Y" values to the fluctuation model 202. That is, the color correction unit 102 functions as a conversion table with respect to the assumed fluctuation model 202 inside the output processing unit 103.

In the configuration of this embodiment, as shown in the lower stage of Fig. 2, fluctuations (here represented as fluctuation model 202) that occur inside the output processing unit 103 are measured based on the output matter colorimetry 201. Then, when the color correction by the color correction unit 102 is generated and updated, the printer can always stably output colors as if it was an ideal printer operating in the ideal state.

Note that this embodiment will explain the color correction. Likewise, since primary colors can be corrected, primary colors and other colors can be stably output.

<Generation Example of Fluctuation Model of This Embodiment>

A generation example of the fluctuation model 202 shown in Fig. 2 will be described first.

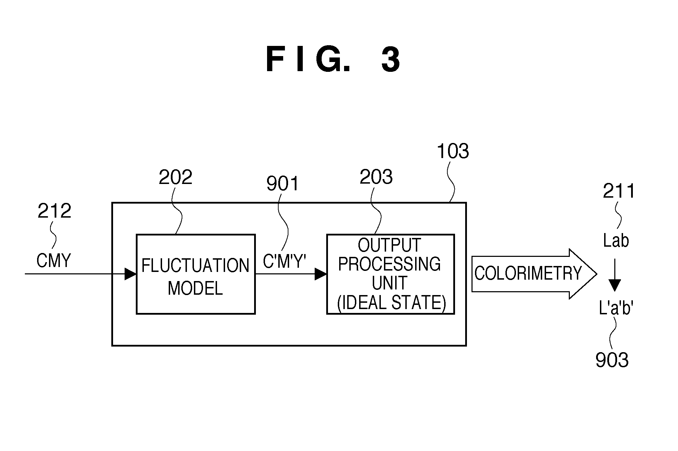

Fig. 3 is a block diagram showing the conversion state of the output processing unit 103 including the fluctuation model 202 and the output processing unit (ideal state) 203 shown in Fig. 2.

In the ideal state, so without any presumed fluctuation model 202, the input CMY values 212 are directly converted into the Lab values 211 as a colorimetry result via the output processing unit (ideal state) 203. On the other hand, in a normal printer which suffers an environmental factor or temporal change, the input CMY values 212 are converted into the C'M'Y' values 901 and this can be thought of as conversion via the fluctuation model 202. As a result, the Lab values 211 change to the L'a'b' values 903.

Color charts used to measure a printer state for all possible printer output colors, for example, $n \times n \times n$ colors for a color gamut defined by CMY colors in case of a printer in which primary colors have n steps, may be actually output. By colorimetrically measuring the color charts of $n \times n \times n$ colors, the actual conversion state of the output processing unit 103 including environmental and temporal fluctuations can be measured. If n is 256, the number of colors is 16,780,000 in the CMY color gamut, and is 4,300,000,000 as a combination of $n \times n \times n \times n$ colors in a CMYK color gamut. Outputting a color chart having 16,780,000 elements would clearly require considerable time and resources. Therefore, in practice, a limited number of points or colors in the color space are selected and corresponding elements are output on a color chart(i.e. a relatively small number of elements are printed compared to the number of colors that can be printed by the printer). Figure 2A shows a color chart as printed on a single sheet 2 of e.g. paper. The color chart comprises a plurality of elements 3 of size 7x7mm. The size of the elements can of course be varied. The elements output on a color chart are typically square or rectangular however other shapes are possible. The elements are shown here as adjoined to each other however the elements may be spaced from each other. The chart may be output on one or more sheets of paper or other printable medium.

The output color chart is colorimetrically measured and the measured values are compared with the output profile table of the printer's ideal state. Differences between the measured values and the values in the output profile table are calculated and the measured differences are interpolated across the C,M,Y space in order to predict a deviation between the actual print performance of the printer and that desired For this reason, a small number of color points or colors in the CMY or CMYK color space which can enable effective detection of as many color fluctuations as possible in the CMY or CMYK color gamut of the printer are required to be designed.

The color chart once printed by the printer may be conveyed to a destination separate to the printer such as for example, a service center, for colorimetric measurement. Alternatively the colorimetric measurement may be performed in situ with the printer.

<Example of Conventional Chart for Color Calibration>

In order to clarify the features of a chart for color calibration generated according to this embodiment, an example of a conventional chart for color calibration and its problems will be explained in detail first.

(Example of Uniform Sampling Steps of Device Color Output Values)

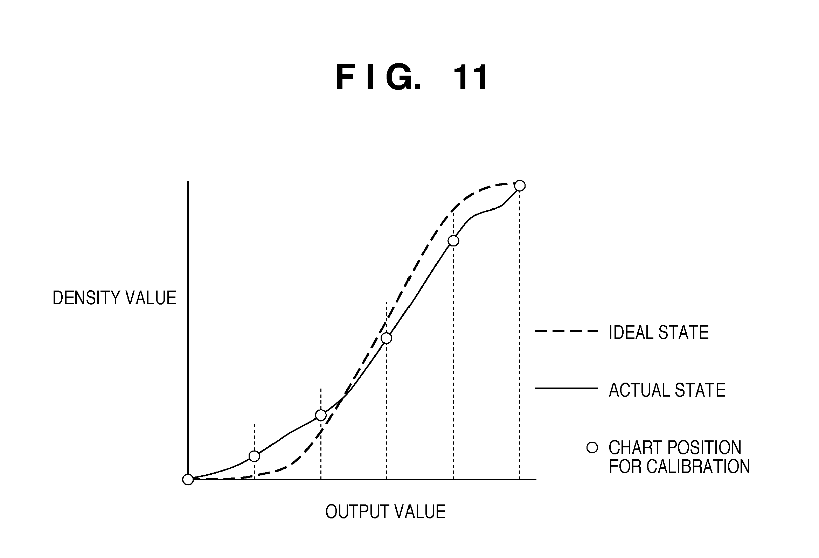

Fig. 11 is a graph showing the relationship between the device color output values and density values, where density refers to an amount of ink or toner, in the conventional printer color gamut.

As shown in Fig. 11, colorimetry is normally performed using uniform sampling steps of the device output colors as sampling steps for color charts used in calibration, and an overall actual state is estimated by interpolation. Six uniform steps require $6 \times 6 \times 6 = 216$ sampled colors in the CMY color gamut, and require $6 \times 6 \times 6 \times 6 = 1,296$ sampled colors in the CMYK color gamut. However, the estimation accuracy is insufficient in a nonlinear range of the density values with respect to the output values in Fig. 11.

Example of Variant Steps of Device Color Output Values)

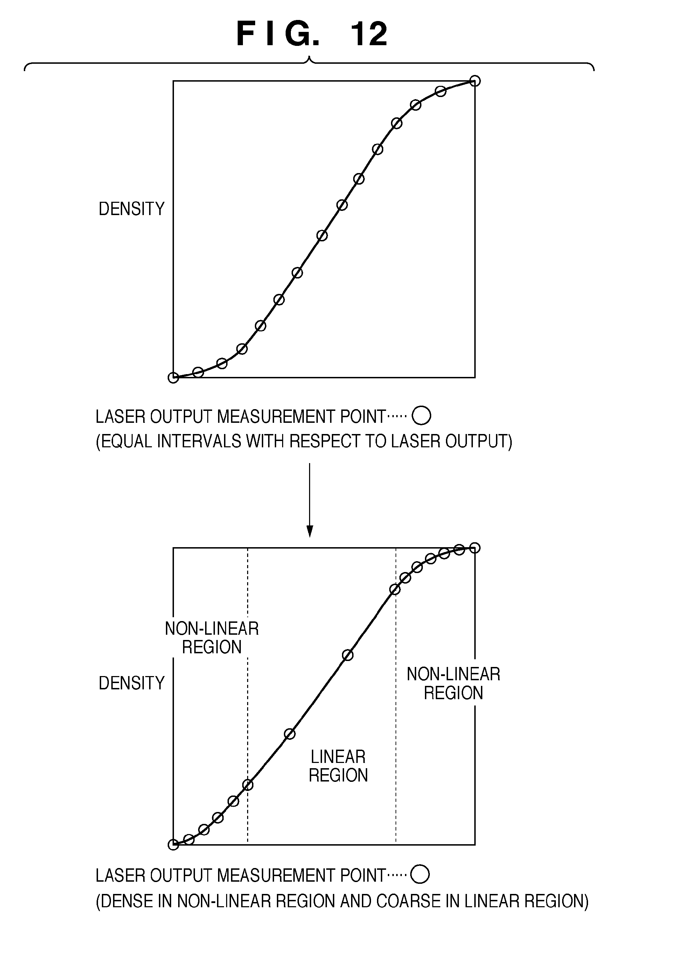

(Fig. 12 shows an example in which a larger number of steps are set in a non-linear tone characteristic region based on Japanese Patent Laid-Open No. 07-264411 mentioned above.

When a larger number of steps are set in a non-linear tone characteristic region, as shown in the lower graph of Fig. 12, the estimation accuracy can be enhanced by the measurement results using variable, rather than uniform (i.e. regularly spaced) steps.

(Problems Posed for Small Number of Sampling points)

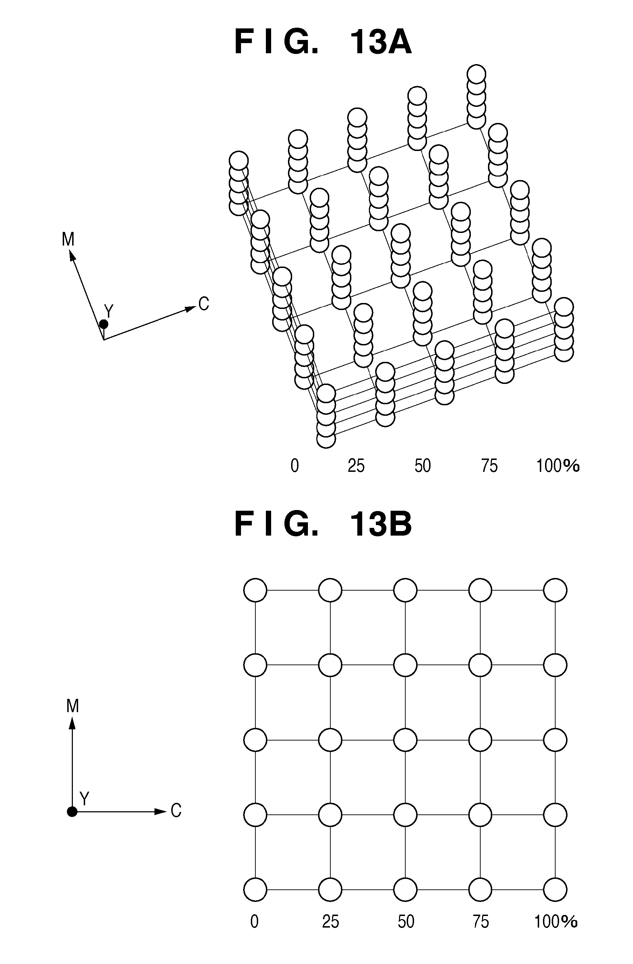

A case will be examined wherein the entire color region is attempted to be corrected using a relatively small number of sampling points, for example, $5 \times 5 \times 5 = 125$ sampled colors of colors (primary colors) when each of CMY primary colors has five sampling steps. Figs. 13A and 13B show 125 sampling points arranged on the CMY color space in this case. Fig. 13A is a three-dimensional arrangement view of sampling points in the CMY color space. The arrangement of sampling points shown in Fig. 13A (and Fig. 13B) is referred to herein as a cubic lattice. Fig. 13B is an arrangement view of a CM (cyan-magenta) plane when viewed from the Y (yellow) axis direction.

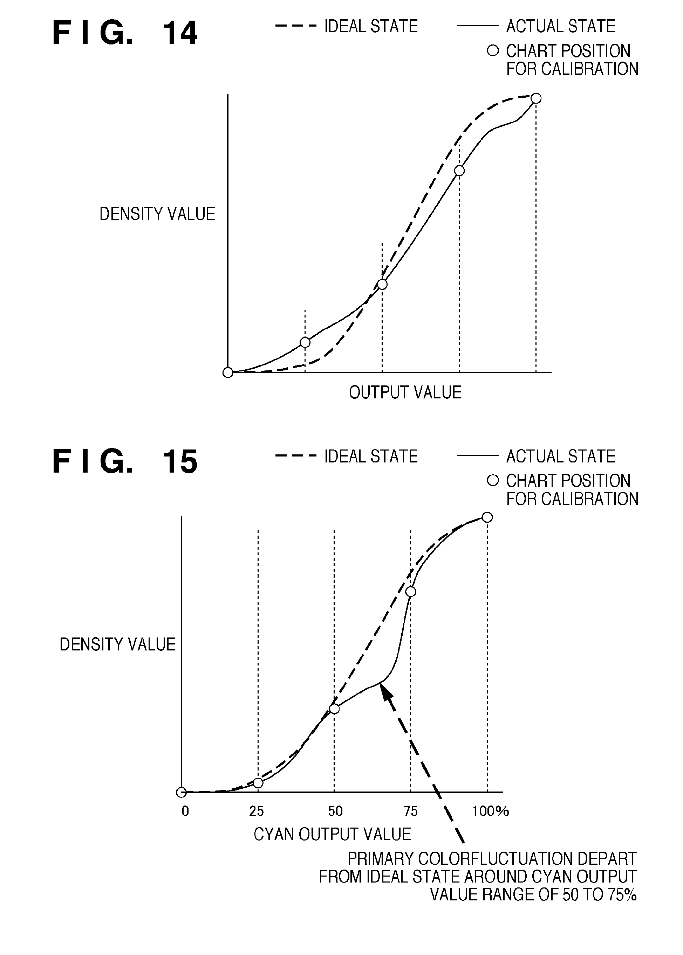

For example, when there are only five sampling steps, the step interval is broader with comparison to a larger number of sampling steps as shown in Fig. 14. Therefore if five sampling steps are chosen, in the aforementioned conventional method, a sufficient number of steps cannot be arranged in either a non-linear region or a linear region in order to be able to effectively detect fluctuations.

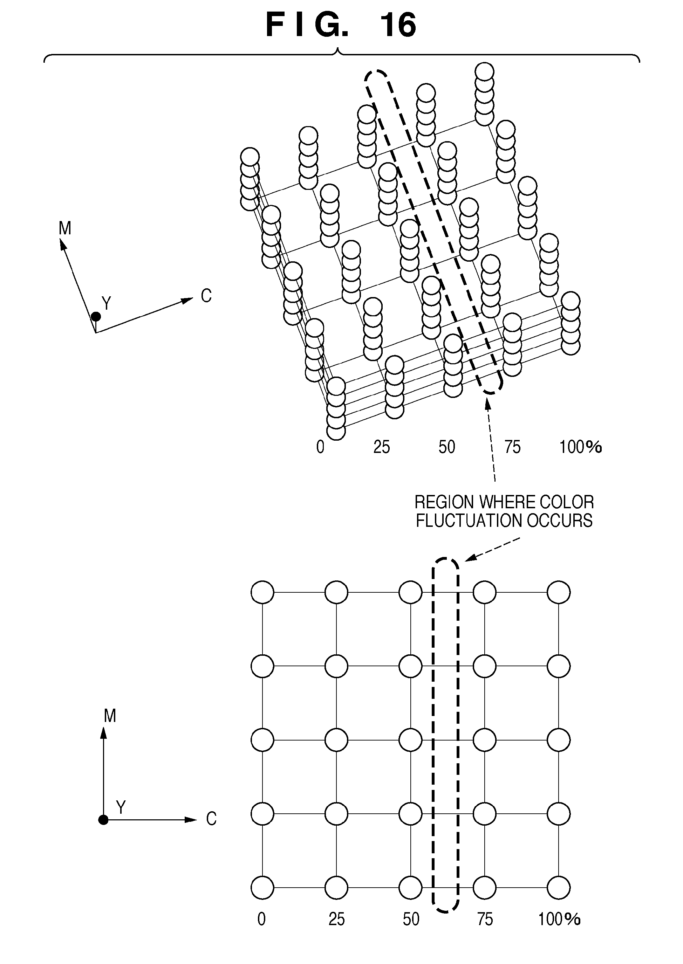

A exemplary case will be examined below wherein primary color fluctuations of cyan depart significantly from the ideal state of the printer model between the sampling points at 50 to 75% output values, as shown in, for example, Fig. 15. If cyan as a primary color fluctuates from the ideal in the manner shown in Fig. 15 then colors produced by overlaying cyan and other colors in the color space will also have color fluctuations from the ideal. Fig. 16 shows, in a 3-D representation of the CMY color space, the region where such fluctuations will occur which is the region bounded by the broken line in Fig. 16.

However, if 125 color sampling points including five steps per color, are reproduced as elements on a color chart the fluctuations in this instance occur between sampling points (and consequently output elements) so that no fluctuations will be apparent from the colorimetric measurement of the 125 elements on the output color chart. For this reason, these particular printer color fluctuations cannot be captured, and cannot be corrected. Color charts including a smaller number of elements thus cannot always sufficiently capture color fluctuations derived from primary color fluctuations.

<First Configuration Example of Chart for Color Calibration of This Embodiment>

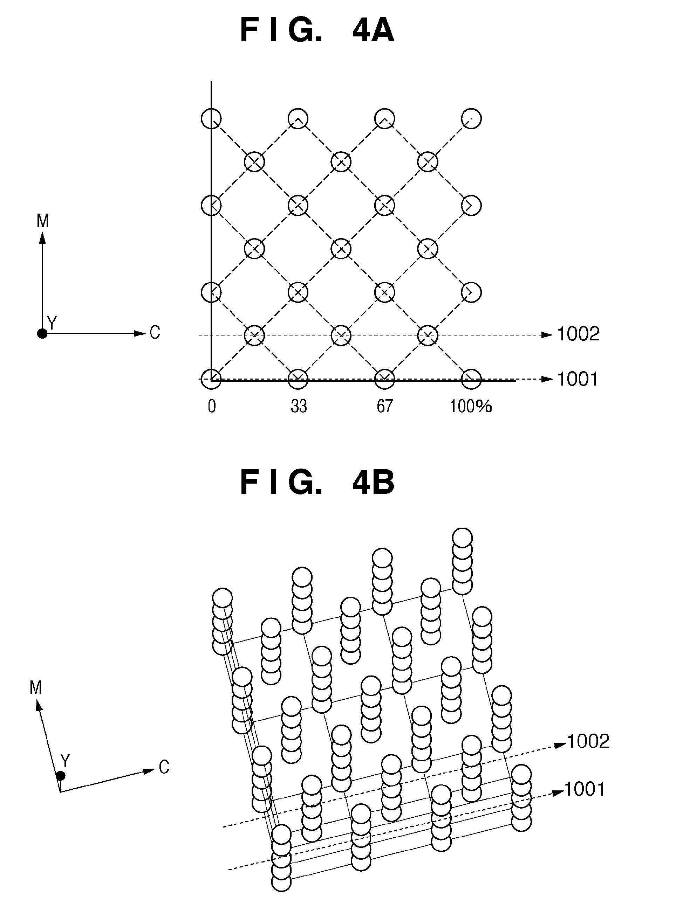

Figs. 4A and 4B show an embodiment of a configuration of color sampling points in the three-dimensional CMY color space, which is proposed by the present invention so as to solve the aforementioned problems.

As shown in Fig. 4A, the sampling points are arranged to be shifted obliquely with respect to the sampling points on the lattice points of the cubic lattice shown in Fig. 13A , while maintaining 25 sampling points on the CM-plane shown in the lower view of Fig. 16. The lattice arrangement of Fig. 4A may be referred to by a person skilled in the art as a "diagonal square lattice". Fig. 4B is a three-dimensional arrangement view of sampling points in CMY color space. Fig. 4A shows a configuration in which the conventional lattice arrangement of the CM-plane (as shown in Fig. 13B) is rotated through 45° round the Y-axis, and the number of sampling points is reduced to an appropriate value (25 in this example) on the CM-plane.

The color space of Fig. 4B has 3 mutually-orthogonal color axes C, M and Y. The color space can be considered as a grid having positions at unit intervals in the directions of the color axes. The grid positions in the C-axis direction are at positions 0%, 17%, 33%, 50%, 67%, 83% and 100%, as shown in Fig. 4A. The unit interval for the C-axis direction is therefore 16.66%. The grid positions in the M-axis direction are also at positions 0%, 16%, 33%, 50%, 67%, 83% and 100%, as shown in Fig. 4A. The unit interval for the M-axis direction is therefore also 16.66%. In the Y-axis direction, there are only 5 grid positions at 0%, 25%, 50%, 75% and 100%. The unit interval for the Y-axis direction is therefore 25%. Of course, the unit interval in Y-axis direction could be made the same as in the C- and M-axis directions, if desired. The sampling points are arranged at selected grid positions but not at other, non-selected, grid positions. For example, there are sampling points at even-numbered grid positions (0%, 33%, 67% and 100%) in the C- and M-axis directions and at sampling points at odd-numbered grid positions (17%, 50%, 83%) in the C- and M-axis directions. There are no sampling points at even-numbered grid positions (0%, 33%, 67%, 100%) in the C-direction and odd-numbered grid positions (17%, 50%, 83%) in the M-direction or at even-numbered grid positions (0%, 33%, 67%, 100%) in the M-direction and odd-numbered grid positions (17%, 50%, 83%) in the C-direction. When a color chart according to the present embodiment is printed by the printer device, respective colors of the colored elements (Fig. 2A) in the chart are determined by sampling points having the arrangement of Fig. 4B in the color space.

(Comparison Between This Embodiment and Related Art)

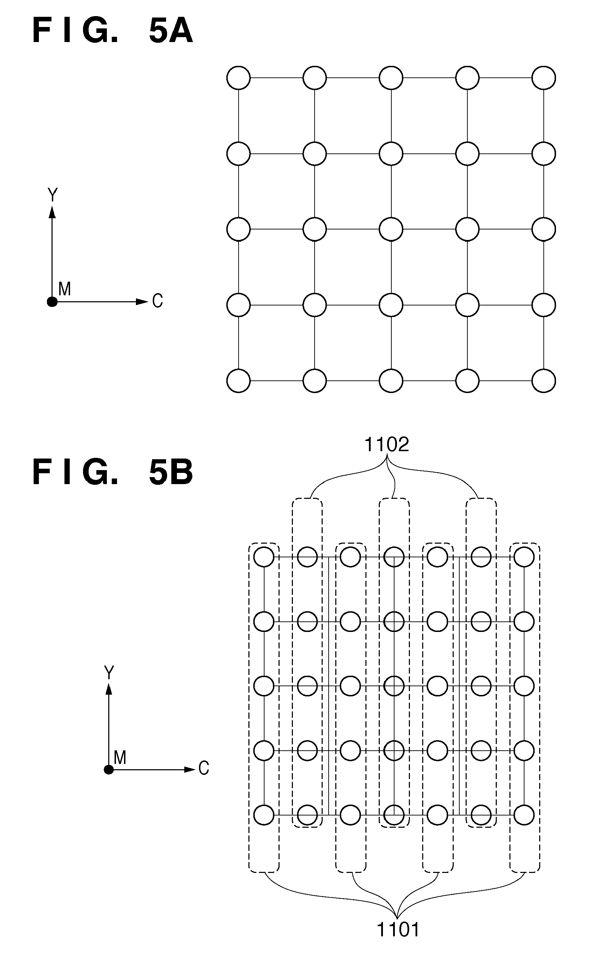

Figs. 5A and 5B show a difference between chart arrangements of the related art and this embodiment. Fig. 5A shows an arrangement of sampling points on the CY-plane of the related art when viewed from the magenta axis side when each primary color has five uniform steps. The lattice arrangement of Fig. 5A may be referred to by a person skilled in the art as an "upright square lattice". Fig. 5A will be compared with Fig. 5B which shows an arrangement of sampling points on the CY-plane, according to this embodiment, when viewed from the magenta axis side.

The cyan axis shown in Fig. 5A, is divided into four regions by five sampling steps. When viewed from the M direction the cyan axis shown in Fig. 5B is divided into six regions by seven steps and the gap between sampling points is proportionally narrowed down to 2/3 (= 4/6) although the number of sampling points remains the same, as can be seen from Fig. 5B of this embodiment. Note that a CY-plane 1001 for a magenta output value = 0% shown in Figs. 4A and 4B corresponds to the sampling point arrangement denoted 1101 in Fig. 5B. A CY-plane 1002 for a magenta output value = 16.7% corresponds to the sampling point chart arrangement denoted 1102 in Fig. 5B. When viewed in the direction of the M-axis, as in Fig. 5B, a spacing between sampling points is equal to the aforementioned unit interval (16.66%) for that axis. Similarly, when viewed in the direction of the C-axis, a spacing between sampling points is equal to the aforementioned unit interval (16.66%) for that axis. Thus, even though the total number of sampling points in Fig. 4B is 125 (the same as in Fig. 16) the spacing between sampling points when viewed in the direction of at least one color axis (the M-axis and C-axis directions) is reduced from 25% to 16.66%, a factor of 1.5 reduction. Thus, a fluctuation region such as the one shown in Fig. 16, which extends parallel to one of the color axes, is more likely to be detected using the arrangement of sampling points in Fig. 4B.

(Effect of This Embodiment)

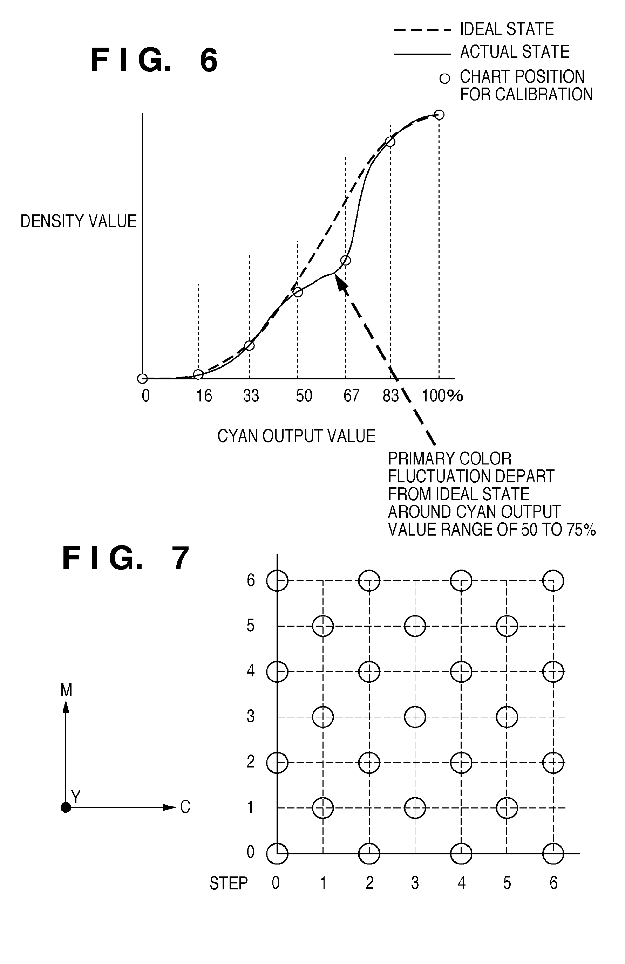

Fig. 6 depicts an example of the effect of the sampling point arrangement shown in Fig. 5B of this embodiment.
Primary color fluctuations of cyan output values may be observed using sampling points on the CY-planes 1001 and 1002 shown in Figs. 4A and 4B to output elements on a color chart, and interpolation can be attained based on the measured colorimetric results.
As described above, a color chart generated according to this embodiment can be used to detect fluctuations in a color region derived from primary color fluctuations that would remain undetected using a conventional color chart even though the number of elements output on the color chart generated according to the invention may be less than or equal to the number of elements on the conventional color chart.
Note that this embodiment has explained the oblique arrangements having the rotation angle of 45° about the Y axis for the sake of simplicity. In other words the selected grid positions conform to a cubic lattice arrangement rotated by 45% the Y-axis, the cubic lattice arrangement having a spacing in the C- and M-axis directions of √2 times the unit interval (16.66%). However, embodiments of the invention are not limited to a rotation angle of 45%. When a rotation angle θ about the device axis (either C, M or Y axis) is given by:

$$\tan\theta = N/M \quad (N/M \text{ is a natural number})$$

fluctuations derived from primary color fluctuations can also be effectively detected while maintaining the same number of sampling points as used in the conventional sampling configuration.
Also, although for convenience this embodiment has explained the configuration method of the chart arrangements of the CM-plane while maintaining steps along the Y-axis, the embodiment could also be applied to the CY-plane while maintaining steps along the M-axis or to the MY-plane while maintaining steps along the C-axis. Also, in order to attain CMYK quarternary color correction, this method is further expanded to realize arrangements which are further oblique to the Y- and K-axes.

<Second Configuration Example of Chart for Color Calibration of This Embodiment>

The first configuration example has explained the configuration method which rotates the conventional cubic lattice sampling point arrangement around the Y-axis, so that the sampling point lattice of the invention is arranged obliquely with respect to the C and M axes. The second configuration example will explain another configuration method that enables the generation of a color chart having the same positive effects as in the first configuration example.
The sampling point arrangements of the CM-plane shown in Fig. 4A of the first configuration example are the same as those shown in Fig. 7. In Fig. 7, assume that the number of steps of each device primary color (C, M or Y in this example) is 7, and respective steps are numbered from 0 to 6 and the sampling points are positioned on a lattice having axes parallel to the axes of each device primary color as shown in Fig. 7. In the configuration of this case, sampling points are positioned on alternate neighboring lattice points so as to alternately repeat positioning/not positioning a sampling point on neighboring lattice points.

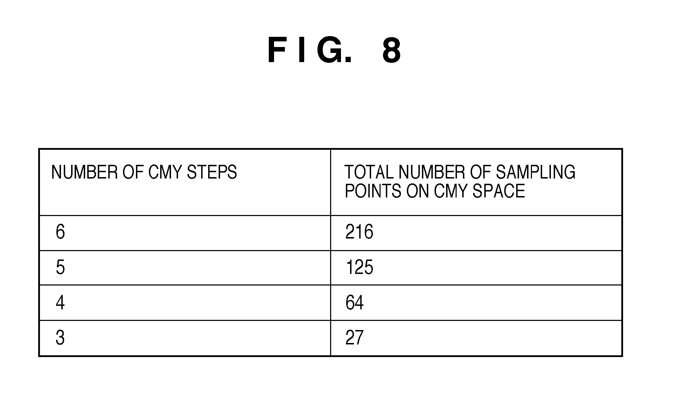

A method of generating a color chart having a smaller number of color elements using the alternate arrangements will be described below. The five uniform steps of CMY device colors require $5 \times 5 \times 5 = 125$ sampling points and corresponding elements, as has already been described above. When designing a color chart with a number of elements fewer than 125, four uniform steps require $4 \times 4 \times 4 = 64$ sampling points and corresponding elements, and thus the number of elements is greatly reduced i.e. from 125 to 64. Fig. 8 shows the relationship between the number of uniform steps of CMY device colors and the number of sampling points and thus color elements output in a color chart.

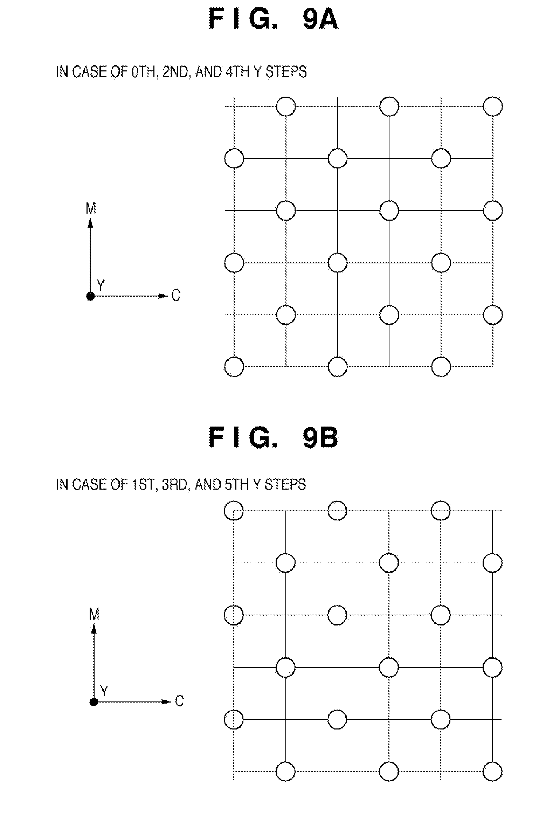

In an exemplary method of the second configuration example, two different planar arrangements each including 18 sampling points arranged on selected grid positions in the CM-plane, as shown in Figs. 9A and 9B, are alternately stacked in six layers in the Y-direction. That is, the sampling points are also alternately arranged in the Y-direction. In case of such CMY alternate arrangements having six steps, the number of sampling points is reduced to 108 (18x6), and the same positive effects as obtained from a color chart generated according to the sampling point arrangement shown in Fig. 4A can be obtained. That is, alternately arranged planar arrangements having sampling points on alternate grid positions can effectively capture color fluctuations derived from primary color fluctuations, for the same reasons as have already been explained with reference to the first configuration example. Clearly, the number of sampling points of the arrangements are not limited to 18 and the two arrangements may also have different numbers of sampling points. Effectively, in the second embodiment, the grid comprises layers arranged one after another in a first-color-axis direction (Y-direction), the layers including one or more first layers (Fig. 9A) and one or more second layers (Fig. 9B). The sampling points in the or each first layer have a first arrangement in second- and third-color-axis directions (CM-plane), and the sampling points in the or each said second layer have a second arrangement, different from the first arrangement, in the second- and third-color axis directions (CM-plane). For example, in the first layers (Fig. 9A) there are sampling points at even-numbered grid positions (steps 0, 2 and 4) in the C- and M-axis directions and at sampling points at odd-numbered grid positions (steps 1, 3, and 5) in the C- and M-axis directions. There are no sampling points at even-numbered grid positions (steps 0, 2, 4) in the C-direction and odd-numbered grid positions (steps 1, 3, 5) in the M-direction or at even-numbered grid positions (steps 0, 2, 4) in the M-direction and odd-numbered grid positions (steps 1, 3, 5) in the C-direction. Within each first or second layer, sampling points are arranged at selected grid positions of the layer but not at other, non-selected, grid positions of the layer. At least one selected grid position in a first layer corresponds to a non-selected grid position in a second layer.

Furthermore, as is known, color fluctuations derived from yellow primary color fluctuations are less visually discernable for humans than those derived from cyan and magenta primary color fluctuations in terms of color difference levels in consideration of human visual characteristics. Hence, a single arrangement of sampling points in the CM-plane such the arrangement shown in Fig. 9A (or the arrangement shown in Fig. 9B) may be stacked in n layers in the Y-direction, rather than alternating the arrangements shown in Figs. 9A and 9B, since color differences caused by Y primary color fluctuations hardly appear in the Y-direction compared to CM due to human visual characteristics. Other options include interspersing or alternating the CM-plane arrangement of Fig. 4B with a CM-plane arrangement as exemplified in Fig. 9A and/or a CM-plane arrangement as exemplified in Fig. 9B.

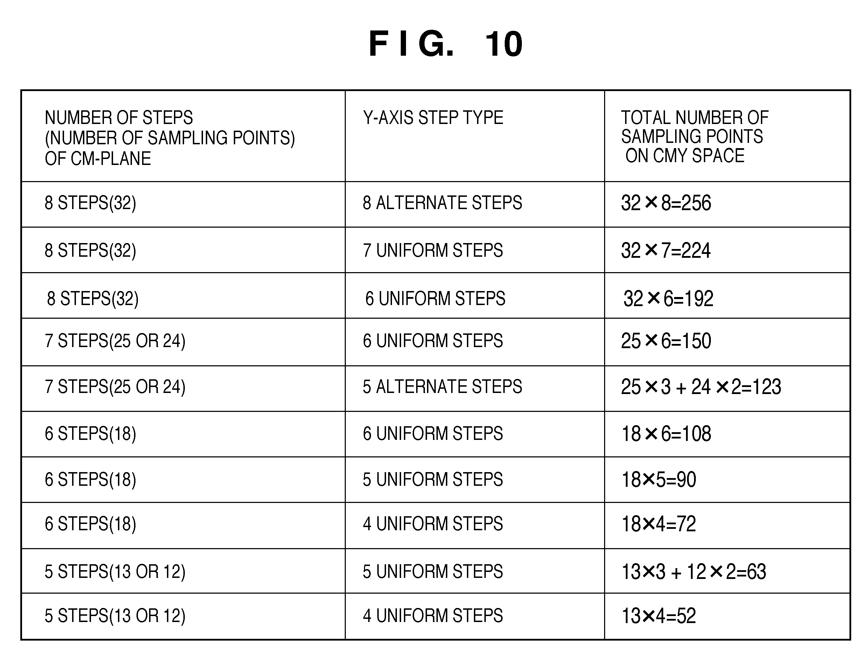

Fig. 10 shows examples of combinations of alternate arrangements of the CM-plane in the Y-direction and uniform arrangements of the CM-plane arrangement in the Y-direction, together with the total numbers of sampling points required on the CMY space. The first row of Fig. 10 thus refers to an example in which two different arrangements in CM plane, each having 32 sampling points, are alternated in 8 steps in the Y direction. The total number of sampling points on the CMY space is thus 256. The second row of Fig. 10 refers to an example in which a CM-plane arrangement having 32 sampling points is repeated in 7 steps on the Y-axis. The total number of sampling points on the CMY space is thus 224. In a CM-plane arrangement having an odd number k of steps the number of sampling points may be $(k^2 + 1) / 2$ or $(k^2 - 1) / 2$. Thus, when k = 7 (as in the fourth and fifth rows in Fig. 10) the number of sampling points per CM-plane is either 25 or 24 or a mixture of the two. Similarly, when k = 5 (as in the ninth and tenth rows in Fig. 10) the number of sampling points per CM-plane is either 13 or 12 or a mixture of the two. The fifth row refers to an example in which one of the CM-plane arrangements has 25 sampling points whilst the other CM-plane arrangement has 24 sampling points. Thus when the two different arrangements are alternated in 5 steps on the Y-axis there will be 3 of one CM-plane arrangement and 2 of the other. In the total number of sampling points it has been presumed that the CM-plane arrangement having 25 steps is used for three of the five steps whilst the CM-plane arrangement having 24 steps is used for two of the five steps. The total number of sampling points could thus clearly be $24 \times 3 + 24 \times 2 = 122$ if the CM-plane arrangements were reversed. As described above, use of the sampling point arrangements of the embodiments allows a reduction in the total number of sampling points and elements on a color chart as much as possible while assuring a high degree of freedom and flexibility regarding the number of sampling points on the CMY color space, while maintaining effective capture or detection of color fluctuations derived from primary fluctuations of device colors.

[Other Embodiments]

In this embodiment, colors in the three-dimensional CIELab space are used as those in the device independent space for the sake of simplicity. However, for example, even when colors in a virtual color space of four dimensions or more such as LabPQR or colors in a spectrum color space are used, the same effects can be achieved by dimension expansion of the method exemplified in this embodiment.

Note that the present invention may be applied to a system or an integrated apparatus comprising a plurality of devices (for example, a host computer, interface device, and printer), or an apparatus including a single device.

Aspects of the present invention can also be realized by a computer of a system or apparatus (or devices such as a CPU or MPU) that reads out and executes a program recorded on a memory device to perform the functions of the above-described embodiment(s), and by a method, the steps of which are performed by a computer of a system or apparatus by, for example, reading out and executing a program recorded on a memory device to perform the functions of the above-described embodiment(s). For this purpose, the program is provided to the computer for example via a network or from a recording medium of various types serving as the memory device (e.g., computer-readable medium).

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

An embodiment of the present invention can provide a chart for color calibration which is output and colorimetrically measured for color calibration of a printer device, **characterized in that** respective charts of a color chart are arranged obliquely with respect to an alignment direction of grid points in a printer device color space, on a color space of the color chart.

The color space of the color chart may be a three-dimensional CMY color space, and respective charts may be arranged obliquely to grid points in the printer device color space, at least on a CM-plane.

Another embodiment of the present invention can provide a chart for color calibration which is output and colorimetrically measured for color calibration of a printer device, **characterized in that** respective charts of a color chart are arranged in a state that a plane in which charts are arranged on grid points and a plane in which charts are not arranged on grid points are alternately combined with respect to grid points in a printer device color space, on a color space of the color chart.

The color space of the color chart may be a three-dimensional CMY color space, and respective charts may be arranged on grid points in a Y-direction.

Another embodiment of the present invention can provide a computer-readable storage medium storing either of the afore-described charts for color calibration.

Another embodiment of the present invention can provide an image processing apparatus which comprises means for outputting a chart for color calibration and means for colorimetrically measuring the output chart for color calibration, and performs color calibration based on the colorimetric result, **characterized in that** in the chart for color calibration, respective charts of a color chart are arranged obliquely with respect to an alignment direction of grid points in a printer device color space or in a state that a plane in which charts are arranged on grid points and a plane in which charts are not arranged on grid points are alternately combined, on a color space of the color chart.

Another embodiment of the present invention can provide an image processing method which comprises the steps of outputting a chart for color calibration and colorimetrically measuring the output chart for color calibration, and performs color calibration based on the colorimetric result, **characterized in that** in the chart for color calibration, respective charts of a color chart are arranged obliquely with respect to an alignment direction of grid points in a printer device color space or in a state that a plane in which charts are arranged on grid points and a plane in which charts are not arranged on grid points are alternately combined, on a color space of the color chart.

Another embodiment of the present invention can provide a computer-readable storage medium storing respective steps of the image processing method and the aforementioned charts for color calibration.

**Claims**

1.  A method of generating a color chart (2) comprising a plurality of colored elements (3) for color calibration of a printer device (103),
    the method comprising the steps of:

    causing the printer device to print the color chart, respective colors of the colored elements being determined by sampling points in a color space having N mutually-orthogonal color axes, where N is three or more, and a grid having positions at unit intervals in the directions of the color axes, which sampling points are arranged at selected grid positions but not at other, non-selected, grid positions so that, when viewed in the direction of at least one of said color axes (M), a spacing between sampling points is equal to said unit interval.

2. A method according to claim 1, wherein the sampling points are arranged so that, when viewed in the direction of at least another one of said color axes (C), a spacing between sampling points is equal to said unit interval.

3. A method according to claim 1, wherein N is three and the selected grid positions conform to a cubic lattice arrangement rotated by a predetermined angle about one of said axes (Y).

4. A method according to claim 3, wherein the cubic lattice arrangement has a spacing of root 2 times said unit interval and the predetermined angle is 45 degrees.

5. A method according to claim 1, wherein N is three and the grid comprises layers arranged one after another in a first-color-axis direction, the layers including one or more first layers (Fig. 9A) and one or more second layers (Fig. 9B), the sampling points in the or each first layer having a first arrangement in second- and third-color-axis directions, and the sampling points in the or each said second layer having a second arrangement, different from the first arrangement, in said second- and third-color axis directions.

6. A method according to claim 5, wherein:

within each said layer sampling points are arranged at selected grid positions of the layer but not at other, non-selected, grid positions of the layer.

7. A method according to claim 6, wherein at least one selected grid position in such a first layer corresponds to a non-selected grid position in such a second layer.

8. A method of calibrating a printer device, comprising:

performing colorimetric measurements on the colored elements of a color chart comprising a plurality of colored elements (3), respective colors of which colored elements are determined by sampling points in a color space having N mutually-orthogonal color axes, where N is three or more, and a grid having positions at unit intervals in the directions of the color axes, which sampling points are arranged at selected grid positions but not at other, non-selected, grid positions so that, when viewed in the direction of at least one of said color axes (M), a spacing between sampling points is equal to said unit interval; and
deriving from the colorimetric measurements color correction data for use by the printer device to correct for differences between ideal colors corresponding to input color data and actual colors printed by the printer device in response to such input color data.

9. A method of printing in a printer device comprising:

inputting color data;
employing the color correction data derived by the method of claim 8 to correct for differences between ideal colors corresponding to the input color data and actual colors printed by the printer device in response to such input color data.

10. A method of printing according to claim 9, wherein the color correction data is employed to modify the input color data and the modified color data is used by the printing device for printing so as to tend to reduce said differences between said ideal colors corresponding to the input color data and the actual colors printed by the printing device.

11. Color chart data which causes a printer device to print a color chart (2) comprising a plurality of colored elements (3) for color calibration of the printer device (103), the color chart data defining sampling points in a color space having N mutually-orthogonal color axes, where N is three or more, and a grid having positions at unit intervals in the directions of the color axes, which sampling points are arranged at selected grid positions but not at other, non-selected, grid positions so that, when viewed in the direction of at least one of said color axes (M), a spacing between sampling points is equal to said unit interval, and respective colors of the colored elements being determined by the sampling points.

**12.** A printer device comprising:

means for generating a color chart (2) comprising a plurality of colored elements (3) for color calibration of a printer device (103), the color chart generating means being adapted to arrange, in a color space having N mutually-orthogonal color axes, where N is three or more, and a grid having positions at unit intervals in the directions of the color axes, sampling points at selected grid positions but not at other, non-selected, grid positions so that, when viewed in the direction of at least one of said color axes (M), a spacing between sampling points is equal to said unit interval; and

means for causing the printer device to print the color chart using the sampling points to determine respective colors of the colored elements.

**13.** A color calibration system comprising:

the printer device of claim 12;

means for performing colorimetric measurements on the colored elements of the color chart printed by the printer device; and

means for deriving from the colorimetric measurements color correction data for use by the printer device to correct for differences between ideal colors corresponding to input color data and actual colors printed by the printer device in response to such input color data.

**14.** A color chart (2) comprising a plurality of colored elements (3) for color calibration of a printer device (103), wherein respective colors of the colored elements are determined by sampling points in a color space having N mutually-orthogonal color axes, where N is three or more, and a grid having positions at unit intervals in the directions of the color axes, which sampling points are arranged at selected grid positions but not at other, non-selected, grid positions so that, when viewed in the direction of at least one of said color axes (M), a spacing between sampling points is equal to said unit interval.

**15.** A computer program which, when executed by a computer, causes the computer to carry out the method of any one of claims 1 to 7, or the deriving step of the method of claim 8, or the method of claim 9 or 10.

FIG. 1

EP 2 160 008 A1

IMAGE DATA → **COLOR CONVERSION UNIT** (101) → CMYK → **COLOR CORRECTION UNIT** (102) → CMYK → **OUTPUT PROCESSING UNIT** (103)

# FIG. 2

EP 2 160 008 A1

# F I G. 2A

# F I G. 3

# F I G. 4A

# F I G. 4B

# F I G. 5A

# F I G. 5B

# F I G. 6

- - - - IDEAL STATE
——— ACTUAL STATE
○ CHART POSITION
  FOR CALIBRATION

DENSITY VALUE

0   16   33   50   67   83   100%

CYAN OUTPUT VALUE

PRIMARY COLOR
FLUCTUATION DEPART
FROM IDEAL STATE
AROUND CYAN OUTPUT
VALUE RANGE OF 50 TO 75%

# F I G. 7

M

Y

C

STEP   0   1   2   3   4   5   6

# F I G. 8

| NUMBER OF CMY STEPS | TOTAL NUMBER OF SAMPLING POINTS ON CMY SPACE |
|---|---|
| 6 | 216 |
| 5 | 125 |
| 4 | 64 |
| 3 | 27 |

# F I G. 9A

IN CASE OF 0TH, 2ND, AND 4TH Y STEPS

# F I G. 9B

IN CASE OF 1ST, 3RD, AND 5TH Y STEPS

# F I G. 10

| NUMBER OF STEPS (NUMBER OF SAMPLING POINTS) OF CM-PLANE | Y-AXIS STEP TYPE | TOTAL NUMBER OF SAMPLING POINTS ON CMY SPACE |
|---|---|---|
| 8 STEPS(32) | 8 ALTERNATE STEPS | $32 \times 8 = 256$ |
| 8 STEPS(32) | 7 UNIFORM STEPS | $32 \times 7 = 224$ |
| 8 STEPS(32) | 6 UNIFORM STEPS | $32 \times 6 = 192$ |
| 7 STEPS(25 OR 24) | 6 UNIFORM STEPS | $25 \times 6 = 150$ |
| 7 STEPS(25 OR 24) | 5 ALTERNATE STEPS | $25 \times 3 + 24 \times 2 = 123$ |
| 6 STEPS(18) | 6 UNIFORM STEPS | $18 \times 6 = 108$ |
| 6 STEPS(18) | 5 UNIFORM STEPS | $18 \times 5 = 90$ |
| 6 STEPS(18) | 4 UNIFORM STEPS | $18 \times 4 = 72$ |
| 5 STEPS(13 OR 12) | 5 UNIFORM STEPS | $13 \times 3 + 12 \times 2 = 63$ |
| 5 STEPS(13 OR 12) | 4 UNIFORM STEPS | $13 \times 4 = 52$ |

EP 2 160 008 A1

# F I G. 11

DENSITY VALUE

OUTPUT VALUE

- - - - IDEAL STATE

——— ACTUAL STATE

○ CHART POSITION
FOR CALIBRATION

# F I G. 12

DENSITY

LASER OUTPUT MEASUREMENT POINT ····· ○
(EQUAL INTERVALS WITH RESPECT TO LASER OUTPUT)

NON-LINEAR
REGION

NON-LINEAR
REGION

DENSITY

LINEAR
REGION

LASER OUTPUT MEASUREMENT POINT ····· ○
(DENSE IN NON-LINEAR REGION AND COARSE IN LINEAR REGION)

# F I G. 13A

M

Y

C

0    25    50    75    100%

# F I G. 13B

M

Y

C

0    25    50    75    100%

**F I G. 14**

--- IDEAL STATE ⎯⎯ ACTUAL STATE
○ CHART POSITION FOR CALIBRATION

DENSITY VALUE

OUTPUT VALUE

**F I G. 15**

--- IDEAL STATE ⎯⎯ ACTUAL STATE
○ CHART POSITION FOR CALIBRATION

DENSITY VALUE

0    25    50    75    100%
CYAN OUTPUT VALUE

PRIMARY COLORFLUCTUATION DEPART
FROM IDEAL STATE AROUND CYAN OUTPUT
VALUE RANGE OF 50 TO 75%

# F I G. 16

REGION WHERE COLOR
FLUCTUATION OCCURS

Europäisches
Patentamt

European
Patent Office

Office européen
des brevets

## EUROPEAN SEARCH REPORT

Application Number

EP 09 16 8520

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 700 198 A (XEROX CORP [US]) 6 March 1996 (1996-03-06) * abstract; figures 4-6 * * column 7, line 26 - column 11, line 8 * | 1-15 | INV. H04N1/60 |
| A | US 5 390 035 A (KASSON JAMES M [US] ET AL) 14 February 1995 (1995-02-14) * abstract; figure 3 * * column 7, line 5 - column 8, line 10 * | 1-15 | |
| A | US 2001/038459 A1 (MAHY MARC [BE]) 8 November 2001 (2001-11-08) * abstract; figures 1-10 * * paragraph [0003] - paragraph [0013] * * paragraph [0020] - paragraph [0023] * * paragraph [0078] - paragraph [0079] * * paragraph [0085] * | 1,8,11, 12 | |
| A | US 5 311 332 A (IMAO KAORU [JP] ET AL) 10 May 1994 (1994-05-10) * abstract; figure 7 * | 1,8,11, 12,14 | |
| A | US 4 929 978 A (KANAMORI KATSUHIRO [JP] ET AL) 29 May 1990 (1990-05-29) | | TECHNICAL FIELDS SEARCHED (IPC) H04N |
| A | US 6 023 351 A (NEWMAN TODD [US]) 8 February 2000 (2000-02-08) | | |
| A | KASSON J M ET AL: "PERFORMING COLOR SPACE CONVERSIONS WITH THREE-DIMENSIONAL LINEAR INTERPOLATION" JOURNAL OF ELECTRONIC IMAGING, SPIE / IS & T, vol. 4, no. 3, 1 July 1995 (1995-07-01), pages 226-249, XP000517861 ISSN: 1017-9909 | | |

The present search report has been drawn up for all claims

| Place of search | Date of completion of the search | Examiner |
|---|---|---|
| Berlin | 15 October 2009 | Kassow, Harald |

EPO FORM 1503 03.82 (P04C01)

**ANNEX TO THE EUROPEAN SEARCH REPORT
ON EUROPEAN PATENT APPLICATION NO.**

EP 09 16 8520

This annex lists the patent family members relating to the patent documents cited in the above-mentioned European search report.
The members are as contained in the European Patent Office EDP file on
The European Patent Office is in no way liable for these particulars which are merely given for the purpose of information.

15-10-2009

| Patent document cited in search report | | Publication date | Patent family member(s) | | Publication date |
|---|---|---|---|---|---|
| EP 0700198 | A | 06-03-1996 | DE 69514596 D1<br>DE 69514596 T2<br>JP 8077341 A<br>US 5581376 A | | 24-02-2000<br>15-06-2000<br>22-03-1996<br>03-12-1996 |
| US 5390035 | A | 14-02-1995 | NONE | | |
| US 2001038459 | A1 | 08-11-2001 | NONE | | |
| US 5311332 | A | 10-05-1994 | NONE | | |
| US 4929978 | A | 29-05-1990 | NONE | | |
| US 6023351 | A | 08-02-2000 | JP 4164214 B2<br>JP 2000188697 A | | 15-10-2008<br>04-07-2000 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 7264411 A